# EUROPÄISCHE PATENTANMELDUNG

(11) **EP 4 147 773 A1**
(43) Veröffentlichungstag der Anmeldung: **15.03.2023**
(21) Anmeldenummer: 22192801.3
(22) Anmeldetag: 30.08.2022
(51) Int. Cl.: B01J 20/10, B01J 20/18, B01J 20/28, B01J 20/30, B29C 48/08, B65D 81/26

(54) **TROCKNUNGSMITTEL, FEUCHTESCHUTZVERPACKUNG UND VERFAHREN ZUR HERSTELLUNG VON TROCKNUNGSKÖRPERN**

(30) Priorität: 10.09.2021 DE 102021210038
(71) Anmelder: Kibele, Ralf, 83607 Holzkirchen (DE); Kipke, Reinhard, 35586 Wetzlar (DE); Nickel, Marco, 35578 Wetzlar (DE)
(72) Erfinder: Kibele, Ralf, 83607 Holzkirchen (DE); Kipke, Reinhard, 35586 Wetzlar (DE); Nickel, Marco, 35578 Wetzlar (DE)
(74) Vertreter: Patentanwälte Magenbauer & Kollegen Partnerschaft mbB

(57) **Zusammenfassung**

Die Erfindung betrifft ein Trocknungsmittel zur Absorption von Wasser und/oder Wasserdampf, aufweisend ein Gemisch aus einem Absorptionsmittel aus der Gruppe: Silicagele, Alumosilikate, insbesondere Zeolithe, und einem Polymer, das eine Wasserdampfdurchlässigkeit von größer 2 g/m2*d, vorzugweise von größer 10 g/m2*d, insbesondere von größer 35 g/m2*d, aufweist und als Matrix für das Absorptionsmittel ausgebildet ist.

## Beschreibung

Die Erfindung betrifft ein Trocknungsmittel zur Absorption von Wasser und/oder Wasserdampf, eine Feuchteschutzverpackung, die mit einem derartigen Trocknungsmittel ausgerüstet ist sowie ein Verfahren zur Herstellung von Trocknungskörpern.

Aus der EP 1 885 795 B2 ist ein geformter Gegenstand bekannt, der eine spritzgegossene, ein Trocknungsmittel enthaltende Kunststoff-Zusammensetzung umfasst, wobei der geformte Gegenstand ein Zylinder mit einem Außendurchmesser von wenigstens 8,00 mm, einer Wanddicke von wenigstens 0,4 mm und einer Gesamtlänge von wenigstens 50,0 mm ist, wobei die Trocknungs-Kunststoff-Zusammensetzung ein Trocknungsmittel, ein Basispolymer aus einem thermoplastischen Polymer und ein Elastomer umfasst, das thermoplastische Material ein Polyethylen mit hoher Dichte ist, das beim Nachgeben eine Zugfestigkeit von wenigstens 25 MPa gemessen unter Verwendung von ISO 527-2 aufweist, wobei das Trocknungsmittel Kieselgel ist, wobei die Beladung des Trocknungsmittels im Bereich von 30.-% bis 50 Gew.-% liegen kann, wobei das Elastomer ein EVA-Copolymer ist, und wobei der sich ergebende geformte Gegenstand Eigenschaften aufweist, die eine Feuchtigkeits-Aufnahmerate von wenigstens 20 mg in 24 Stunden gemessen mit dem Desiccant Rate of Absorption Test-Verfahren und eine Steifigkeit von wenigstens 25 Newton gemessen mit dem Mechanical Resistance Control Test-Verfahren aufweist.

Die Aufgabe der Erfindung besteht darin, ein Trocknungsmittel, eine Feuchteschutzverpackung und ein Verfahren zur Herstellung von Trocknungskörpern bereitzustellen, mit denen ein vorteilhafter Schutz von feuchtigkeitsempfindlichen Produkten erzielt werden kann.

Diese Aufgabe wird gemäß einem ersten Erfindungsaspekt für ein Trocknungsmittel in der nachstehenden Weise gelöst: das Trocknungsmittel weist ein Gemisch aus einem Absorptionsmittel aus der Gruppe: Silicagele, Alumosilikate, insbesondere Zeolithe, und einem Polymer, das eine Wasserdampfdurchlässigkeit von größer 2 g/m2*d, vorzugweise von größer 10 g/m2*d, insbesondere von größer 35 g/m2*d, auf, wobei das Polymer als Matrix für das Absorptionsmittel ausgebildet ist.

Die Aufgabe des Absorptionsmittels besteht darin, Wasserdampf bzw. Wasser zu absorbieren und damit einen Feuchtigkeitsentzug für die Umgebung zu erzielen, in der das Trocknungsmittel angeordnet ist.

Die hierbei zur Verwendung vorgesehenen Absorptionsmittel können Silicagele, Alumosilikate, insbesondere Zeolithe, oder Gemische hiervon sein.

Durch eine Einbindung des vorzugsweise in Pulverform mit einer Korngröße kleiner 1mm zur Verwendung kommenden Absorptionsmittels in eine Matrix aus einem Polymer werden mehrere vorteilhafte Eigenschaften für das dadurch geschaffene Trocknungsmittel verwirklicht.

Die erste vorteilhafte Eigenschaft ist darin zu sehen, dass durch die Kombination des Absorptionsmittels mit dem Polymer ein Materialverbund geschaffen wird, aus dem das Absorptionsmittel im Rahmen eines bestimmungsgemäßen Gebrauchs nicht austreten kann oder freigesetzt wird, womit eine Kontamination einer Umgebung des Trocknungsmittels mit dem Absorptionsmittel vermieden wird.

Die zweite vorteilhafte Eigenschaft ist darin zu sehen, dass durch das Polymer, das die einzelnen Körner/Partikel des vorzugsweise pulverförmig vorliegenden Absorptionsmittels zumindest bereichsweise umschließt, eine Reduzierung der Austauschoberfläche für den jeweiligen Partikel des Absorptionsmittels hervorgerufen wird.

Hierdurch findet eine Drosselung eines Zustroms für das im Absorptionsmittel zu absorbierende Medium, also Wasser und/oder Wasserdampf, statt. Durch diese Drosselwirkung wird eine Handhabbarkeit für das Trocknungsmittel verbessert, da hierdurch vermieden werden kann, dass sich das Trocknungsmittel beispielsweise während eines Verpackungsprozesses im Zeitraum zwischen dem Zeitpunkt des Öffnens einer Umverpackung für das Trockenmittel bis zum Verpacken des Trockenmittels zusammen mit dem zu schützenden Gut in einer Verpackungsmaschine einschließlich aller technischen und organisatorischen Unterbrechungen durch Kontakt mit der Umgebungsluft vollständig mit Wasser oder Wasserdampf belädt und somit keine weitere Absorptionskapazität mehr aufweist und seiner Trocknungsaufgabe in der Verpackung nicht mehr nachkommen kann.

Die Bestimmung der Wasserdampfdurchlässigkeit für das Polymer, das einen Mischungsbestandteil für das Trocknungsmittel bildet, erfolgt nach den Vorgaben der DIN 53122-1:2001-08.

Vorteilhafte Weiterbildungen der Erfindung sind Gegenstand der Unteransprüche.

Zweckmäßig ist es, wenn das Absorptionsmittel einen Anteil von 20 bis 80 Gewichtsprozent, vorzugsweise einen Anteil von 50 bis 75 Gewichtsprozent, insbesondere einen Anteil von 55 bis 70 Gewichtsprozent, am Gemisch aufweist. Hierdurch wird eine vorteilhafte mechanische Stabilisierungswirkung durch die vom Polymer gebildete Matrix für das Absorptionsmittel erzielt. Ferner wird durch diese Mischungszusammensetzung eine vorteilhafte Drosselungswirkung für die Absorptionswirkung des Absorptionsmittels durch die Matrix gewährleistet. Darüber hinaus ist hiermit auch eine günstige Trocknungskapazität für das Trocknungsmittel sichergestellt.

Bevorzugt ist vorgesehen, dass das Polymer nach der Vorschrift DIN EN 13432:2000-12 und/oder nach der Vorschrift ASTM D6400-19 aerobisch kompostierbar ausgebildet ist. Hierbei liegt die Überlegung zugrunde, dass die zur Verwendung in dem Gemisch für das Trocknungsmittel vorgesehenen Absorptionsmittel typischerweise weder bei einer Einlagerung auf einer Abfalldeponie noch bei einer thermischen Verwertung in einer Müllverbrennungsanlage als kritisch zu betrachten sind. Um ein möglichst leistungsfähiges Trocknungsmittel bereitstellen zu können, das auch eine vorteilhafte ökologische Bilanz für sich beanspruchen kann, ist vorgesehen, dass das Polymer, das zur Bildung der Matrix für das Trocknungsmittel dient, nach einer der derzeit geltenden Vorschriften in der freien Natur durch Umwelteinflüsse wie Sonnenbestrahlung, Beregnung und Temperaturwechsel in einem durch die jeweilige Vorschrift gesteckten Zeitrahmen abgebaut werden kann.

In weiterer Ausgestaltung der Erfindung ist vorgesehen, dass das Polymer aus der Gruppe: Cellulose, Celluloseacetat, Polymilchsäure (PLA - Polylactide), thermoplastische Stärke, Polyhydroxyalkaonate (PHA), Polyvinylalkohol ausgewählt ist.

Bei einer vorteilhaften Weiterbildung der Erfindung ist vorgesehen, dass das Absorptionsmittel als Molekularsieb mit einer Porenweite in einem Intervall von 2 nm (2 Angström) bis 8 nm (8 Angström), insbesondere in einem Intervall von 3 nm (3 Angström) bis 4 nm (4 Angström), ausgebildet ist.

Vorteilhaft ist es, wenn das Gemisch aus dem Polymer und dem Absorptionsmittel besteht. Hier ist vorgesehen, dass außer dem Absorptionsmittel und dem Polymer im fertigen Trocknungsmittel keine weiteren Stoffe enthalten sind. Dies schließt jedoch nicht aus, dass bei der Herstellung des Gemischs und/oder bei einem eventuellen Formungsvorgang für das Trocknungsmittel zu einem Trocknungskörper einer oder mehrere Hilfsstoffe eingesetzt werden. Die Gestaltung des Trocknungsmittels als Gemisch aus genau zwei Stoffen (Absorptionsmittel, Polymer) erleichtert die Einhaltung der Vorschriften für die aerobische Kompostierbarkeit.

Bevorzugt ist vorgesehen, dass aus dem Gemisch ein formstabiler/dimensionsstabiler Trocknungskörper mit einem Volumen größer 4mm3 gebildet ist. Vorzugsweise ist der Trocknungskörper zylindrisch, insbesondere kreiszylindrisch oder quaderförmig ausgebildet. Ein solcher Trocknungskörper kann entweder manuell durch einen Benutzer oder automatisiert in einer Verpackungsanlage verwendet und in einen entsprechenden Behälter, insbesondere eine Feuchteschutzverpackung, eingelegt oder montiert werden. Bevorzugt ist vorgesehen, dass eine Geometrie des Trocknungskörpers und ein zur Aufnahme des Trocknungskörpers vorgesehener Abschnitt des Behälters derart aufeinander abgestimmt sind, dass der Trocknungskörper kraftschlüssig und/oder formschlüssig am bzw. im Behälter festgelegt werden kann.

Die Aufgabe der Erfindung wird gemäß einem zweiten Erfindungsaspekt durch eine Feuchteschutzverpackung gelöst. Diese Feuchteschutzverpackung umfasst einen verschließbar ausgebildeten, insbesondere aus einem nach der Vorschrift DIN EN 13432:2000-12 und/oder nach der Vorschrift ASTM D6400-19 aerobisch kompostierbaren Polymer hergestellten, Behälter, der im verschlossenen Zustand ein Raumvolumen begrenzt, in dem ein erfindungsgemäßer Trocknungskörper angeordnet ist. Bevorzugt ist der Behälter zumindest bereichsweise formstabil ausgebildet, wobei vorsehen werden kann, den Trocknungskörper in dem formstabilen Bereich anzuordnen. Beispielhaft ist vorgesehen, dass die Feuchteschutzverpackung einen hülsenförmig und formstabil ausgebildeten Behälterkörper und einen damit, insbesondere einstückig, verbundenen, ebenfalls formstabilen Behälterdeckel aufweist, der zum Verschließen einer Behälter-öffung des Behälterkörpers ausgebildet ist. Bevorzugt ist vorgesehen, dass die Feuchteschutzverpackung aus einer Kombination der Materialien Polymilchsäure (PLA - Polylactide) und Polyhydroxyalkaonat (PHA) hergestellt ist. Besonders bevorzugt bildet jedes dieser Materialien eine Schicht der Feuchteschutzverpackung. Beispielhaft wird durch eines der Materialien eine Innenschicht der Feuchteschutzverpackung gebildet, während das andere Material die Außenschicht der Feuchteschutzverpackung bildet. Zur Reduzierung der Feuchtedurchlässigkeit der Feuchteschutzverpackung ist eine mehrlagige Gestaltung der Feuchteschutzverpackung unter Verwendung einer oder mehrerer Schichten aus den vorgenannten Materialien möglich.

Bei einer Weiterbildung der Feuchteschutzverpackung ist vorgesehen, dass der Behälter im verschlossenen Zustand einen Feuchtigkeitseintritt von weniger als 1000 Mikrogramm pro Tag bei einer relativen Feuchtigkeit von 80% und 22 Grad Celsius aufweist und/oder dass der Behälter und das Trocknungsmittel derart aufeinander abgestimmt sind, dass in dem vom Behälter begrenzten Raumvolumen ein konstanter Feuchtigkeitsgehalt vorliegt.

Die Aufgabe der Erfindung wird gemäß einem dritten Erfindungsaspekt durch ein Verfahren zur Herstellung von Trocknungskörpern gelöst, das zumindest die nachfolgenden Schritte umfasst: Herstellen eines Gemischs aus einem Absorptionsmittel aus der Gruppe: Silicagele, Alumosilikate, insbesondere Zeolithe, und einem Polymer, das eine Wasserdampfdurchlässigkeit von größer 2 g/m2*d, vorzugweise von größer 10 g/m2*d, insbesondere von größer 35 g/m2*d, aufweist und als Matrix für das Absorptionsmittel ausgebildet ist in einem Extruder, Extrudieren des Gemischs mit dem Extruder als Folie sowie Durchführen eines Schneidevorgangs oder eines Stanzvorgangs für die Folie zur Erzeugung von Trocknungskörpern, die als Folienabschnitte oder Folienausschnitte ausgebildet sind, oder Extrudieren des Gemischs mit dem Extruder als Stange und Zerteilen der Stange zu Stangenabschnitten sowie Zuführen der Stangenabschnitte zu einer Kunststoffspritzgussmaschine und Durchführen eines Kunststoffspitzgussvorgangs zur Erzeugung von dreidimensional strukturierten Trocknungskörpern.

## Patentansprüche

1. Trocknungsmittel zur Absorption von Wasser und/oder Wasserdampf, aufweisend ein Gemisch aus einem Absorptionsmittel aus der Gruppe: Silicagele, Alumosilikate, insbesondere Zeolithe, und einem Polymer, das eine Wasserdampfdurchlässigkeit von größer 2 g/m2*d, vorzugweise von größer 10 g/m2*d, insbesondere von größer 35 g/m2*d, aufweist und als Matrix für das Absorptionsmittel ausgebildet ist.

2. Trocknungsmittel nach Anspruch 1, **dadurch gekennzeichnet, dass** das Absorptionsmittel einen Anteil von 20 bis 80 Gewichtsprozent, vorzugsweise einen Anteil von 50 bis 75 Gewichtsprozent, insbesondere einen Anteil von 55 bis 70 Gewichtsprozent, am Gemisch aufweist.

3. Trocknungsmittel nach Anspruch 1 oder 2, **dadurch gekennzeichnet, dass** das Polymer nach der Vorschrift DIN EN 13432:2000-12 und/oder nach der Vorschrift ASTM D6400-19 aerobisch kompostierbar ausgebildet ist.

4. Trocknungsmittel nach Anspruch 1, 2 oder 3, **dadurch gekennzeichnet, dass** das Polymer aus der Gruppe: Cellulose, Celluloseacetat, Polymilchsäure, thermoplastische Stärke, Polyhydroxyalkaonate, Polyvinylalkohol ausgewählt ist.

5. Trocknungsmittel nach einem der vorhergehenden Ansprüche, **dadurch gekennzeichnet, dass** das Absorptionsmittel als Molekularsieb mit einer Porenweite in einem Intervall von 2 nm bis 8 nm, insbesondere in einem Intervall von 3 nm bis 4 nm, ausgebildet ist.

6. Trocknungsmittel nach einem der vorhergehenden Ansprüche, **dadurch gekennzeichnet, dass** das Gemisch aus dem Polymer und dem Absorptionsmittel besteht.

7. Trocknungsmittel nach einem der vorhergehenden Ansprüche, **dadurch gekennzeichnet, dass** aus dem Gemisch ein formstabiler/dimensionsstabiler Trocknungskörper mit einem Volumen größer 4mm3 gebildet ist.

8. Feuchteschutzverpackung zur Aufbewahrung einer feuchtigkeitsempfindlichen Substanz, mit einem verschließbar ausgebildeten, insbesondere aus einem nach der Vorschrift DIN EN 13432:2000-12 und/oder nach der Vorschrift ASTM D6400-19 aerobisch kompostierbaren Polymer hergestellten, Behälter, der im verschlossenen Zustand ein Raumvolumen begrenzt, in dem ein Trocknungskörper angeordnet ist, der aus einem Trocknungsmittel nach einem der vorhergehenden Ansprüche hergestellt ist.

9. Feuchteschutzverpackung nach Anspruch 8, **dadurch gekennzeichnet, dass** der Behälter im verschlossenen Zustand einen Feuchtigkeitseintritt von weniger als 1000 Mikrogramm pro Tag bei einer relativen Feuchtigkeit von 80% und 22,2 Grad Celsius aufweist und/oder dass der Behälter und das Trocknungsmittel derart aufeinander abgestimmt sind, dass in dem vom Behälter begrenzten Raumvolumen ein konstanter Feuchtigkeitsgehalt vorliegt.

10. Verfahren zur Herstellung von Trocknungskörpern mit den Schritten: Herstellen eines Gemischs nach einem der Ansprüche 1 bis 6 in einem Extruder, Extrudieren des Gemischs mit dem Extruder als Folie sowie Durchführen eines Schneidevorgangs oder eines Stanzvorgangs für die Folie zur Erzeugung von Trocknungskörpern, die als Folienabschnitte oder Folienausschnitte ausgebildet sind, oder Extrudieren des Gemischs mit dem Extruder als Stange und Zerteilen der Stange zu Stangenabschnitten sowie Zuführen der Stangenabschnitte zu einer Kunststoffspritzgussmaschine und Durchführen eines Kunststoffspitzgussvorgangs zur Erzeugung von dreidimensional strukturierten Trocknungskörpern.
